# EUROPEAN PATENT APPLICATION

(11) **EP 1 808 708 A2**
(43) Date of publication of application: **18.07.2007**
(21) Application number: 07000090.6
(22) Date of filing: 04.01.2007
(51) Int. Cl.: G01S 1/00

(54) **Power saving device for GPS device**

(30) Priority: 11.01.2006 CN 200610004902
(71) Applicant: Kinpo Electronics Inc., Shenkeng Shiang, Taipei Hsien 222 (TW)
(72) Inventor: Sun, Chun-I, Shenkeng Shiang Taipei Hsien (TW)
(74) Representative: Helms, Joachim

(57) **Abstract**

A power saving device for a GPS device is to utilize acceleration of gravity sensor to continue detecting the acceleration variation of the GPS device; if an acceleration value is larger than a threshold value, a GPS signal receiver is then started; if the acceleration value is smaller than the threshold value, the GPS signal receiver is then shut. This allows the GPS device to be power saving and not need to facilitate an extra oscillation switch therein to save the production cost.

## Description

### BACKGROUND OF THE INVENTION

### 1. Field of the Invention

The present invention relates to a GPS device, and more particularly to a power saving device for a GPS device.

### 2. Description of Related Art

The upgrading of the manufacturing technology and the functions of an electronic product enable the use of a GPS device to be more popular. There are many types of the GPS device such as a portable GPS device convenient for being used in an individual's mountain climbing and travel, GPS device combined with a cellular phone and GPS device combined with a vehicle allowing a user to realize his position and the direction of the destination that he wants to go if it is operated in coordination with an electronic map.

All general portable GPS devices use a battery to provide electricity. When a GPS receiver is in a normal operation, it is very power consuming. If the GPS device is not moved, it can enter a rather power consuming mode, the power can then be saved so that the use life of the battery can be extended.

U.S. Pat. No. 6,774,838 discloses a power saving device and method for a GPS receiver, in which the power saving device allows the GPS receiver to be connected to an oscillation switch and the vibration generated from the moving of the GPS receiver can be utilized to actuate the oscillation switch to turn on the power of the GPS receiver automatically with a power controller. The oscillation switch enables the power controller to turn off the power of the GPS receiver automatically when the GPS receiver is not moved so that the power can be saved.

An acceleration of gravity sensor (G-sensor) is installed in a several GPS devices. The G-sensor detects the variation of gravity to measure the acceleration generated from the movement of a body and output a simulated voltage signal. This can provide the data of the acceleration of the body so as to assist the GPS receiver to provide the data of the velocity and the position of the body even in such as a time period that the satellite signals cannot be received or well received when it is in tunnel or is blocked by mountains, trees, buildings and etc. When the G-sensor is under a work voltage of 3.3 volts, the power consumption thereof is 1 mA; this is far less than the one needed for the GPS receiver.

### SUMMARY OF THE INVENTION

For improving a conventional power saving device for a GPS device to allow the production cost to be more saved, the present invention is proposed.

The main object of the present invention is to provide a power saving device for a GPS device, enabling the GPS device to have a function of power saving.

Another object of the present invention is to provide a power saving device for a GPS device, utilizing a G-sensor installed therein and needing no extra oscillation switch so as to save the production cost.

### BRIEF DESCRIPTION OF THE DRAWINGS

The present invention can be more fully understood by reference to the following description and accompanying drawings, in which:
F I G. 1 is a block diagram of a power saving device for a GPS device of a preferred embodiment according to the present invention.

### DETAILED DESCRIPTION OF THE INVENTION

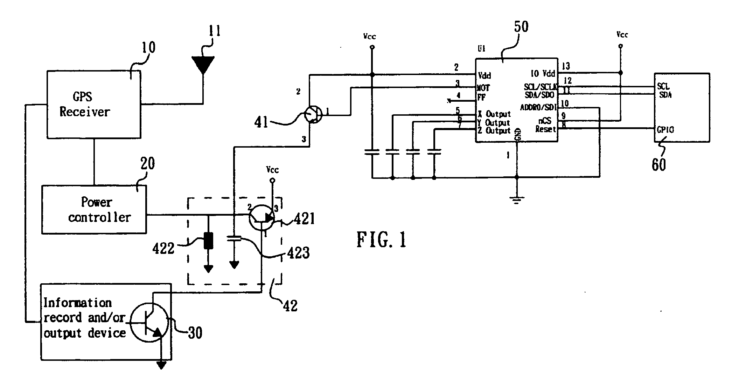

Please refer to F I G. 1. FIG. 1 is a power saving device for a GPS device of a preferred embodiment according to the present invention. The power saving device comprises a GPS receiver 10 electrically connected to a GPS antenna 11, a power controller 20 and an information record and/or output device 30, in which a time delay controller 42 is respectively electrically connected to the power controller 20, the information record and/or output device 30 and the emitter (second pole) of a first transistor 41. The time delay controller 42 comprises a second transistor 421, a resistor 422 and a capacitor 423. The emitter (third pole) of the second transistor 421 is connected to the power source. The collector (second pole) is electrically connected to the power controller 20. One end of the resistor 422 and one end of the capacitor 423 are grounded, other ends thereof are respectively electrically connected to the collector of the second transistor 4 2 1. The information record and/or output device 30 are connected to the base of the second transistor 421. The collector (second pole) of the first transistor 41 is electrically connected to the power source and the base (first pole) thereof is electrically connected to the MOT pin of a G-sensor 50. The G-sensor 50 is communicated with a microprocessor 60 through a transmission interface (SCL, SDA). The microprocessor 60 can set a threshold value triggered by the MOT pin of the G-sensor 50 through this transmission interface.

When the power controller 20 detects that the capacitor 423 is charged to have a higher potential, it then starts the GPS receiver 1 0; when the power controller 20 detects that the capacitor 423 has a lower potential, it then closes the GPS receiver 10.

The capacitor 423 has a higher potential at two following conditions:
(a) When the G-sensor 50 detects that the acceleration value of its movement is beyond the threshold value, it converts the MOT pin to be at a high potential to output a starting signal to allow the first transistor 41 to be communicated, the power is delivered to the power controller 20 and to the capacitor 423 too to cause the capacitor 423 to be charged. Or
(b) When the information record and/or output device 30 is forced to output a low potential, the emitter and the collector of the second transistor 421 are communicated with each other to cause the collector thereof to be at a high potential and the capacitor 423 to be charged. Besides, it also causes the power controller 20 to receive a high potential signal.

The capacitor 423 has a lower potential at two following conditions:
(a) when the G-sensor 50 detects that the acceleration value of its movement is below the threshold value, it converts the MOT pin to be at a low potential and then stop outputting a starting signal to cause the first transistor 41 not to be communicated; no power is delivered to the capacitor 423 to cause the capacitor 423 not to be charged. And
(b) when the information record and/or output device 30 is not forced to output a low potential to cause the emitter and the collector of the second transistor 421 not to be communicated, the collector thereof does not charge the capacitor 423;
the capacitor 423 is at a low potential by means of the gradual discharge of the resistor 422.

Selecting different resistor 422 and capacitor 423 can adjust the discharge rate of the capacitor 423, further control the time that the capacitor 423 is converted to be at a low potential so as to delay the time that the power controller 20 detects that the capacitor 423 has a lower potential to extend the outputting of the signal controlling the GPS receiver 10 from the power controller 20 and further to extend the action time of the GPS receiver 1 0.

The information record and/or output device 30 according to the present invention has a CPU, capable of processing and operating a position signal transmitted from the GPS receiver 10, and storing or outputting the processed and operated position signal. After the recording and/or outputting device 30 finishes the data recording and/or outputting action, it can then stop outputting the forced low potential to cause the emitter and the collector of the second transistor 421 not to be communicated.

The G-sensor 50 according to the present invention can be an acceleration of gravity sensing chip of serial No. KX984. The microprocessor can be a general microprocessor, such as serial No. 80C51. When the GPS device stops moving, it then enter a power saving mode after a time period; only the G-sensor 50 is left for continuing maintaining power supply and detecting the variation of the acceleration of the GPS device. If the acceleration value is beyond the threshold value, it then starts the GPS receiver.

The present invention causes the more power consuming GPS receiver to be automatically turned on and off and only causes the more power saving G-sensor to maintain supplying power to process the detection when the GPS device is stopped, this can greatly save the power. Furthermore, the present invention only utilizes the G-sensor installed in the GPS device to be an element detecting whether r the GPS device starts moving or not, other extra oscillation switches need not to be installed, this can rather save the production cost.

Additional advantages and modifications will readily occur to those skilled in the art. Therefore, the invention in its broader aspects is not limited to the specific details and representative embodiments shown and described herein. Accordingly, various modifications may be made without departing from the spirit or scope of the general inventive concept as defined by the appended claims and their equivalents.

## Claims

1. A power saving device for a GPS device, used for automatically controlling a power source of a GPS receiver according to a movement state so as to save power, comprising:
said GPS receiver;
an acceleration of gravity sensor (G-sensor), electrically connected to a power controller, used for detecting whether an acceleration value thereof is beyond a threshold value; outputting a starting signal when said acceleration value is beyond said threshold value and stopping outputting said starting signal when said acceleration value is below said threshold value;
said power controller, electrically connected to said GPS receiver, used for detecting said starting signal so as to start or close said GPS receiver.

2. The power saving device according to claim 1, wherein said G-sensor is electrically connected to the first pole of a transistor; the third pole of said first transistor is electrically connected to said power controller, the second pole thereof is electrically connected to said power source; thereby, said starting signal output from said G-sensor is caused to drive through said first transistor, a power source signal is transmitted to said power controller.

3. The power saving device according to claim 1, wherein said power controller and said G-sensor are respectively electrically connected to a time delay controller, whereby, after said time delay controller is caused to receive said starting signal output from said G-sensor, said time delay controller extends an output time of said starting signal so as to extend a time outputting a signal controlling said GPS receiver from said power controller, and further to extend an action time of said GPS receiver.

4. The power saving device according to claim 2, wherein said power controller and the third pole of said first transistor are respectively connected to a time delay controller; whereby, after said time delay controller is caused to receive said starting signal output form said G-sensor through said first transistor, said time delay controller extends an output time of said starting signal so as to extend a time outputting a signal controlling said GPS receiver from said power controller, and further to extend an action time of said GPS receiver.

5. The power saving device according to claim 4, wherein said time delay controller comprises a resistor and a capacitor, one end of said resistor and one end of said capacitor are grounded, other ends thereof are respectively electrically connected to said power controller and the third pole of said first transistor.

6. The power saving device according to claim 5, wherein said time delay controller further comprises a second transistor; the second pole of said second transistor is electrically connected to other ends of said resistor and said capacitor, the third pole thereof is electrically connected to said power source, the first pole thereof is electrically connected to an information record and/or output device; said information record and/or output device further electrically connected to said GPS receiver; whereby, after said information record and/or output device completes a data recording and/or outputting action, a forced l o w potential is then stopped to cause the emitter and collector of said second transistor not to be communicated and the collector of said second transistor not to charge said capacitor, otherwise, said information record and/or output device will continue outputting said forced low potential to cause the emitter and the collector of said second transistor to be communicated and charge said capacitor to cause said capacitor not to be at a low potential.

7. The power saving device according to claim 1, wherein said G-sensor further electrically connected to a microprocessor; whereby, said microprocessor is allowed to set a threshold value outputting a starting signal from said G-sensor.
